# EUROPÄISCHE PATENTSCHRIFT

(11) **EP 1 170 081 B1**
(45) Veröffentlichungstag und Bekanntmachung des Hinweises auf die Patenterteilung: **14.06.2006**
(21) Anmeldenummer: 01115133.9
(22) Anmeldetag: 22.06.2001
(51) Int. Cl.: B23D 61/02, B23D 65/00, C21D 9/24, C21D 9/00

(54) **Verfahren zur Herstellung eines Sägeblattes mit gegenüber dem Schneidblatt plastisch hervorstehenden Befestigungsteil**
Process for making a saw blade with mounting part protruding plastically from blade
Procédé de fabrication d'une lame de scie ayant partie de fixation faisant saillie plastiquement au-dessus de la surface de la lame

(30) Priorität: 03.07.2000 DE 10032297
(43) Veröffentlichungstag der Anmeldung: 09.01.2002
(73) Patentinhaber: C. & E. Fein GmbH, 73529 Schwäbisch-Gmünd-Bargau (DE)
(72) Erfinder: Peisert, Andreas, 70195 Stuttgart (DE); Pollak, Roland, 65594 Runkel (DE)
(74) Vertreter: Gahlert, Stefan

(56) Entgegenhaltungen:
- DD-A- 82 746
- DE-A- 3 408 944
- DE-A- 19 825 758
- DE-C- 3 124 252
- DE-U- 29 721 475
- FR-A- 2 620 526
- US-A- 5 697 835

## Beschreibung

Die Erfindung betrifft ein Verfahren zur Herstellung eines Sägeblattes, umfassend ein Schneidblatt, an dem ein abgekröpftes, gegenüber dem Schneidblatt plastisch hervorstehendes Befestigungsteil vorgesehen ist, in dem eine Befestigungsöffnung zur Befestigung an einer Antriebswelle vorgesehen ist.

Aus der DE 296 05 728 U1 sind ein solches Sägeblatt und ein Verfahren zur Herstellung eines solchen bekannt. Solche Sägeblätter werden insbesondere in Zusammenhang mit einem oszillierenden Antrieb verwendet, dessen Antriebswelle mit hoher Frequenz um ihre Längsachse oszilliert, um spezielle Schneidaufgaben zu bewältigen. Durch die Abkröpfung des Befestigungsteils wird hierbei sichergestellt, daß keine Befestigungselemente über die Ebene des Schneidblattes hervorstehen.

Mit solchen Sägen lassen sich insbesondere Karosseriebleche und andersgeartete Bleche bis zu einer Blechstärke von etwa 1 mm mühelos schneiden, wobei durch den oszillierenden Antrieb eine Verletzungsgefahr ausgeschlossen ist. Des weiteren sind derartige Sägen zum Schneiden von Holz und glasfaserverstärktem Kunststoff besonders geeignet.

Die bekannten Sägeblätter bestehen aus einem ebenen, kreisförmigen Schneidblatt, das in der Mitte eine zentrale Befestigungsöffnung vorzugsweise mit einem Vielkant zur formschlüssigen Befestigung an der Antriebswelle aufweist.

Gemäß der eingangs genannten DE 296 05 728 U1 wird das Sägeblatt aus einem ebenen kreisförmigen Schneidblatt, das aus gehärtetem Stahl, etwa HSS-Stahl besteht, sowie aus einem zentral gekröpften Befestigungsteil, in dem die Aufnahmeöffnung vorgesehen ist, hergestellt. Das Befestigungsteil wird mit einer umlaufenden Laserschweißnaht auf das Schneidblatt aufgeschweißt, um eine stoffschlüssige Verbindung zwischen Schneidblatt und Befestigungsteil zu erzielen.

In der Praxis hat sich jedoch gezeigt, daß trotz der lasergeschweißten Verbindung zwischen Schneidblatt und Befestigungsteil eine ausreichend dauerhafte Verbindung zwischen beiden Teilen nicht immer gewährleistet ist. So kann bei starker Belastung eine Ablösung des Befestigungsteils vom Schneidblatt auftreten, wodurch das Sägeblatt unbrauchbar wird.

Ein weiteres Sägeblatt mit einem abgekröpften, gegenüber dem Schneidblatt plastisch hervorstehenden Befestigungsteil ist aus der US 5 697 835 bekannt.

Aus dieser Druckschrift ist jedoch nicht entnehmbar, wie ein solches Sägeblatt hergestellt werden kann.

Durch einen einstückigen Aufbau eines derartigen Sägeblattes wäre sicherlich eine höhere Festigkeit erreichbar. Problematisch hierbei ist allerdings ein Verzug, der sich bei der zur Herstellung notwendigen Wärmebehandlung hierbei einstellt.

Im Stand der Technik sind zwar grundsätzlich Spannvorrichtungen zum Spannen von dünnwandigen Werkstücken zur Verringerung eines Verzuges bei einer Wärmebehandlung bekannt (DE 297 21 475 U1), jedoch sind derartige Spanneinrichtungen nur für die Behandlung von ebenen Teilen gebräuchlich.

Die Aufgabe der Erfindung besteht demnach darin, die obigen Nachteile zu vermeiden und ein Verfahren zum Herstellen eines stabilen Sägeblattes anzugeben, bei dem die Gefahr einer Ablösung zwischen Schneidblatt und Befestigungsteil vermieden wird.

Diese Aufgabe wird durch ein Verfahren mit den folgenden Schritten gelöst:
(a) Austrennen eines Rohlings aus härtbarem Stahlblech,
(b) Umformen des Rohlings zur Ausbildung des abgekröpften Befestigungsteils,
(c) Austrennen der Befestigungsöffnung,
(d) Stapeln einer Mehrzahl von nach den Schritten (a) bis (c) hergestellten Rohlingen und Einspannen in einer Vorrichtung,
(e) Aufheizen der Rohlinge zum Austenitisieren und anschließendes Abschrecken zum Härten der Rohlinge und
(f) Feinbearbeiten, vorzugsweise Schleifen, der Sägeblätter zur Herstellung einer Verzahnung an deren Außenrändern.

Die Aufgabe der Erfindung wird auf diese Weise vollkommen gelöst.

Überraschenderweise hat es sich gezeigt, daß es möglich ist, das Schneidblatt und das Befestigungsteil einstückig aus gehärtetem Stahl auszubilden.

Im Stand der Technik war grundsätzlich bislang davon ausgegangen worden, daß ein derartiges Sägeblatt immer aus zwei Teilen hergestellt werden muß, nämlich zum einen aus dem ebenen Schneidblatt, das aus gehärtetem Stahl besteht, sowie aus dem abgekröpften Befestigungsteil, das mit dem Schneidblatt stoffschlüssig verbunden wurde, z.B. verschweißt oder verklebt wurde. Der Grund hierfür liegt darin, daß ein Umformen solcher schwer umformbarer Bleche etwa aus HSS-Stahl bislang nicht für möglich gehalten wurde.

Nach dem erfindungsgemäßen Verfahren läßt sich jedoch nunmehr das gewünschte Sägeblatt mit einem abgekröpften Befestigungsteil einstückig aus härtbarem Stahlblech herstellen.

Dadurch, daß eine Mehrzahl von Rohlingen nach dem Tiefziehen und Austrennen der Befestigungsöffnung aufeinandergestapelt wird und in einer Vorrichtung eingespannt wird, wobei beispielsweise Blöcke von etwa 100 bis 200 Rohlingen gebildet werden können, wird eine ausreichend verzugsfreie Wärmebehandlung bei den nachfolgenden Schritten gewährleistet.

Die so hergestellten Sägeblätter zeichnen sich durch eine erheblich verbesserte mechanische Stabilität gegenüber aus zwei Elementen hergestellten Sägeblättern aus. Insbesondere ermöglicht die erhöhte Steifigkeit ein besseres Handling beim Schneiden und Sägen, insbesondere bei einem freihändigen Erzeugen von möglichst geraden Schnitten.

In vorteilhafter Weiterbildung der Erfindung werden im Schritt (d) jeweils benachbarte Rohlinge durch Zwischenlage einer Scheibe voneinander getrennt.

Auf diese Weise läßt sich eine verzugsfreie Härtung erreichen, da die Rohlinge mit den Scheiben zu einem kompakten Block verspannbar sind. Die Scheiben können dabei wiederverwendet werden.

Die Sägeblätter werden ferner in bevorzugter Weiterbildung der Erfindung nach dem Abschrecken nochmals angelassen, um die Eigenschaften durch Vergütung weiter zu verbessern.

Das Austrennen der Rohlinge und das Austrennen der Befestigungsöffnungen geschieht vorzugsweise durch Stanzen, wodurch eine rationelle Arbeitsweise erreicht wird.

Zusammen mit einem Austrennen der Befestigungsöffnung kann in bevorzugter Weiterbildung der Erfindung auch ein Grobbearbeiten der Rohlinge an ihren Außenrändern, vorzugsweise durch Stanzen durchgeführt werden.

Dies erleichtert die spätere Ausbildung der Verzahnung an den Außenrändern.

Das Umformen der Rohlinge gemäß Schritt (b) kann durch Tiefziehen, Drücken, Biegen oder hydraulisches Umformen erfolgen.

Dabei sind das Drücken, das zur Umformung von rotationssymmetrischen Teilen besonders geeignet ist, oder das Tiefziehen bevorzugt.

Des weiteren ist es möglich, die Rohlinge zum Umformen zu erwärmen, wodurch eine Kaltverfestigung während des Umformvorgangs und eine damit zusammenhängende Neigung zu Spannungsrissen vermieden wird.

Ein Tiefziehen der Rohlinge im kalten Zustand zur Ausbildung des abgekröpften Befestigungsteils erfolgt vorzugsweise mit einem langsamen Vorschub und mit hoher Preßkraft, um die Entstehung von Rissen während und nach dem Umformvorgang zu vermeiden.

In vorteilhafter Weiterbildung des erfindungsgemäßen Verfahrens wird spätestens innerhalb von 24 Stunden, vorzugsweise jedoch innerhalb von 12 Stunden, besser jedoch sogar innerhalb von 6 Stunden nach dem Umformen der Rohlinge mit einem Rekristallisationsglühen begonnen.

Es hat sich gezeigt, daß auf diese Weise Spannungsrisse vermieden werden können, die sonst schon nach einer Zeitdauer von ein bis zwei Tagen infolge von Alterungsvorgängen im Anschluß an die vorherige Umformung auftreten würden.

Hierbei erfolgt auch das Austrennen der Befestigungsöffnung aus dem Befestigungsteil, das vorzugsweise durch Ausstanzen erreicht wird, möglichst unmittelbar nach dem Umformen, um die Entstehung von Spannungsrissen zu verhindern.

Sofern eine Warmumformung erfolgt, kann gegebenenfalls auf ein Rekristallisationsglühen verzichtet werden.

Die Geometrie der Kröpfung des Befestigungsteils wird vorzugsweise so gewählt, daß sich die Sägeblätter zum Härten und Anlassen spaltfrei zu einem Block zusammenspannen lassen.

Auf diese Weise wird der Verzug während des Härte- und Anlaßvorgangs sehr gering gehalten.

Gemäß einer vorteilhaften Weiterbildung des erfindungsgemäßen Verfahrens werden die Rohlinge nach der Wärmebehandlung gemäß den Schritten (e) bis (f) im noch zusammengespannten Zustand am Umfang feinbearbeitet, vorzugsweise geschliffen, um so die Verzahnung auf möglichst rationelle Weise herzustellen.

Zur Herstellung der Sägeblätter wird vorzugsweise ein Schnellarbeitsstahl verwendet, vorzugsweise mit den Hauptlegierungsbestandteilen Wolfram, Molybdän und Kobalt, etwa ein HSS-Stahl mit der Zusammensetzung von 0,8 bis 0,95 Gew.-% C, 3,8 bis 4,7 Gew.-% Cr, 4,5 bis 5,5 Gew.-% Mo, 1,7 bis 2,1 Gew.-% V, 5,8 bis 7 Gew.-% W mit Rest Fe, wobei etwa der Legierungstyp 33 34.0 S 600 von BÖHLER STAHL Deutschland GmbH, Düsseldorf, verwendet werden kann, der 0,87 Gew.-% C, 4,3 Gew.-% Cr, 5 Gew.-% Mo, 1,9 Gew.-% V, 6,4 Gew.-% W mit Rest Fe enthält.

Die Rohlinge werden vorzugsweise aus einem Blech einer Stärke von etwa 0,7 bis 1,5 mm, vorzugsweise von etwa 1 mm Stärke, ausgetrennt.

Mit einer derartigen Stärke ist das betreffende Sägeblatt besonders zur Verwendung mit einem oszillierenden Antrieb geeignet, der mit hoher Frequenz mit etwa 3.000 bis 25.000 Oszillationen pro Minute und kleinem Verschwenkwinkel von etwa 0,5 bis 6 ° um die Antriebsachse hin- und her oszilliert. Dabei liegt der Durchmesser der betreffenden Sägeblätter, die vorzugsweise kreisförmig oder kreisabschnittförmig ausgebildet sind, in einem Bereich von etwa 8 bis 12 cm, vorzugsweise bei etwa 10 cm.

Unabhängig davon können die erfindungsgemäßen Sägeblätter auch mit rotatorischem Antrieb verwendet werden, etwa als Kreissägeblätter, wobei dann lediglich die Verzahnung an den Außenrändern entsprechend angepaßt wird.

Bei Verwendung des oben erwähnten Werkstoffes und der oben erwähnten Geometrie hat es sich als vorteilhaft erwiesen, die Rohlinge nach dem Einspannen in der Vorrichtung zunächst über etwa 1,5 bis 2,5 Stunden bei einer Temperatur von etwa 600 bis 700 °C zu rekristallisieren, bevor ein Austenitisieren über etwa 3 bis 5 Minuten bei etwa 1.020 bis 1.080 °C durchgeführt wird. Das Austenitisieren schließt sich vorzugsweise aus Gründen der Wirtschaftlichkeit unmittelbar an das Rekristallisieren an.

Der Abschreckvorgang zum Härten erfolgt vorzugsweise im Salzbad bei etwa 500 bis 550 °C. Grundsätzlich ist jedoch auch ein Abschrecken an Luft oder im Ölbad möglich.

Der nachfolgende Anlaßvorgang umfaßt vorzugsweise ein erstes Anlassen beim Sekundärhärtemaximum über eine Zeitdauer von etwa 1,5 bis 2,5 Stunden bei etwa 530 bis 630 °C, sowie ein zweites Anlassen auf eine gewünschte Arbeitshärte über etwa 1,5 bis 2,5 Stunden bei etwa 530 bis 630 °C, sowie ein drittes Anlassen zum Entspannen über etwa 40 bis 80 Minuten bei etwa 400 bis 500 °C.

Die Wärmebehandlungsschritte werden vorzugsweise unter einer reduzierenden Gasatmosphäre durchgeführt, um eine Verzunderung zu vermeiden. Hierzu kann etwa ein Formiergas 95/5, also ein Gemisch aus 95 Vol.-% Stickstoff und 5 Vol.-% Wasserstoff verwendet werden.

Die Sägeblätter werden gemäß einer weiteren Ausführung der Erfindung jeweils an ihren beiden gegenüberliegenden Außenoberflächen plangeschliffen und gegebenenfalls mit einem Feinschliff versehen, sofern je nach dem gewünschten Anwendungsfall eine hohe Planizität gefordert wird.

Insbesondere bei Verwendung mit einem oszillierenden Antrieb kann jedoch gegebenenfalls auch auf das Planschleifen verzichtet werden.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine Ansicht eines erfindungsgemäßen Sägeblattes von oben;
- Fig. 2: eine Seitenansicht des Sägeblattes gemäß Fig. 1 und
- Fig. 3: einen Schnitt durch einen Stapel von Sägeblattrohlingen, die unter Zwischenlage von Scheiben zur Härtung zu einem kompakten Block verspannt werden.

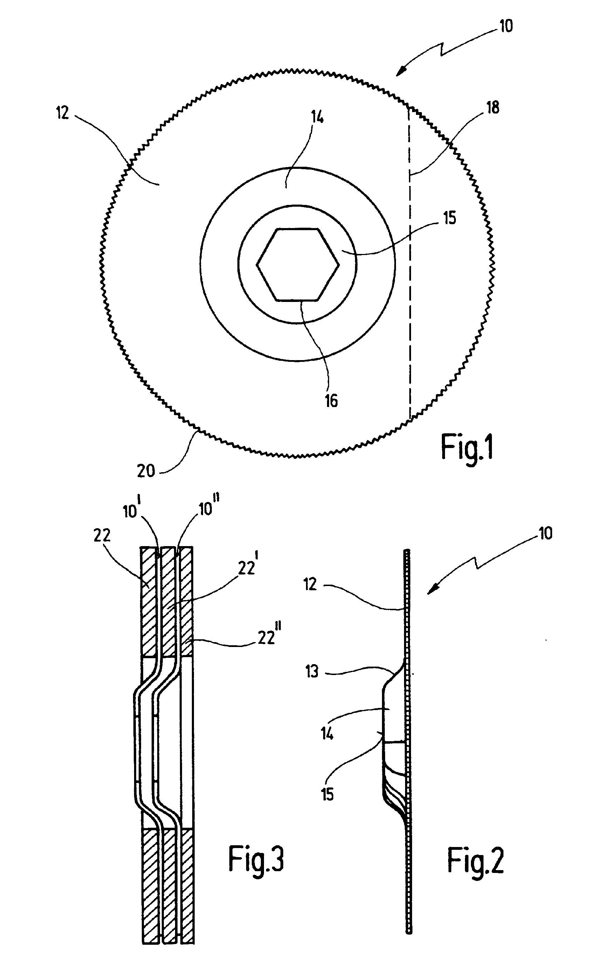

In Fig. 1 ist ein erfindungsgemäßes Sägeblatt in der Aufsicht von oben dargestellt und insgesamt mit der Ziffer 10 bezeichnet.

Das Sägeblatt 10 ist kreisförmig ausgebildet und besteht aus einem ebenen Schneidblatt 12, das an seinem Außenumfang mit einer Verzahnung 20 versehen ist, sowie aus einem zentralen Befestigungsteil 14, das abgekröpft ist und somit plastisch gegenüber der Ebene des Schneidblattes 12 nach außen hervorgewölbt ist.

Wie im einzelnen aus Fig. 2 ersichtlich, besitzt das Befestigungsteil 14 einen abgekröpften Wandabschnitt 13, der stufenlos in die Ebene des Schneidblattes 12 übergeht und zur Mitte hin in eine ebene Aufnahmefläche 15 ausläuft, die parallel zur Ebene des Schneidblattes 12 ausgebildet ist. In dieser Aufnahmefläche 15 ist eine Befestigungsöffnung 16 vorgesehen, die vorzugsweise als Mehrkant, etwa als Sechskant, wie dargestellt, oder als Zwölfkant ausgebildet sein kann, um eine formschlüssige Befestigung an einer Antriebswelle zu ermöglichen.

Das Sägeblatt 10 ist einstückig aus einem Wolfram-Molybdän-Schnellarbeitsstahl hergestellt. Im dargestellten Ausführungsbeispiel wurde der Legierungstyp 33 43.0 S 600 der Firma BÖHLER STAHL Deutschland GmbH, Düsseldorf, zur Herstellung des Sägeblattes verwendet. Dieser weist typischerweise 0,87 Gew.-% C, 4,3 Gew.-% Cr, 5 Gew.-% Mo, 1,9 Gew.-% V, 6,4 Gew.-% W mit Rest Fe auf.

Zur Herstellung wurde folgendermaßen vorgegangen:

Aus einem Rohblech wurden kreisförmige Ronden mit einem Durchmesser von etwa 100 mm ausgestanzt. Anschließend wurde in einer hydraulischen Presse im kalten Zustand das Befestigungsteil 14 durch Tiefziehen mit langsamem Vorschub und hoher Preßkraft (ca. 600 Tonnen) ausgezogen. Der Durchmesser des abgekröpften Wandabschnittes 13 betrug ca. 50 mm, während der Durchmesser der ebenen Aufnahmefläche 15 etwa 37 mm betrug und der Abstand der Aufnahmefläche 15 (Außenoberfläche) von der Außenoberfläche des Schneidblattes 12 etwa 4 bis 5 mm betrug.

Nach dem Tiefziehen wurde ohne größere zeitliche Verzögerung die zentrale Befestigungsöffnung 16 in Form eines Sechskants mit einem Stanzwerkzeug ausgestanzt.

Etwa 100 bis 200 solcher Rohlinge wurden anschließend jeweils unter Zwischenlage von Scheiben 22, 22', 22'' übereinandergelegt und in einer Vorrichtung (Härtepresse) zu einem kompakten Block zusammengespannt, wie in Fig. 3 für lediglich zwei Rohlinge 10', 10'' schematisch angedeutet ist, wobei auf die Darstellung der Spannvorrichtung verzichtet wurde.

Hierbei wurde die Form des abgekröpften Wandabschnittes 13 derart gewählt, daß die einzelnen Rohlinge 10', 10'' unter Zwischenlage der Scheiben 22, 22', 22" spaltfrei zu einem kompakten Block zusammengespannt werden konnten.

Anschließend wurde mit der Wärmebehandlung der Rohlinge begonnen. Zunächst wurden die zusammengespannten Rohlinge etwa 2 Stunden bei 650 °C rekristallisiert, dann innerhalb des Ofens annähernd bis auf Raumtemperatur abgekühlt. Danach erfolgte ein Austenitisieren, was mit einer ersten Vorwärmstufe bei etwa 500 °C bei einer kurzen Haltezeit von einigen Minuten und einer zweiten Vorwärmstufe bei 900 °C, wiederum mit einer Haltezeit von einigen Minuten erfolgte, wobei dann anschließend auf 1050 °C aufgeheizt und etwa vier Minuten lang gehalten wurde, bevor der Abschreckvorgang erfolgte. Für eine spätere Serienherstellung wird bevorzugt, das Aufheizen auf die Austenitisierungstemperatur unmittelbar an die Rekristallisation ohne Zwischenabkühlung anzuschließen.

Das Abschrecken erfolgte im Salzbad bei etwa 500 °C bis 550 °C.

Nach einer entsprechenden Reinigung schloß sich ein erster Anlaßvorgang beim Sekundärhärtemaximum über etwa 2 Stunden bei 580 °C an, nach einer Abkühlung auf Raumtemperatur ein zweites Anlassen, wiederum mit einer Haltedaüer von 2 Stunden bei etwa 580 °C. Anschließend erfolgte ein Abkühlen auf Raumtemperatur und ein weiteres Anlassen zum Entspannen mit einer Haltedauer von etwa einer Stunde bei 450 °C mit anschließender Abkühlung auf Raumtemperatur.

Das Rekristallisationsglühen und das Austenitisierungsglühen wurden unter Formiergas 95/5 durchgeführt.

Mit dem Rekristallisationsglühen wurde spätestens etwa 6 bis 12 Stunden nach dem Tiefziehvorgang begonnen, wodurch die Ausbildung von Spannungsrissen im Bereich des abgekröpften Wandabschnittes vermieden werden konnte.

Nach dem dritten Anlassen und der nachfolgenden Abkühlung auf Raumtemperatur wurde die Verzahnung 20 am Außenumfang der kreisförmigen Sägeblätter im noch zusammengespannten Zustand durch Schleifen erzeugt, wodurch eine rationelle Herstellung gewährleistet wurde.

Die so hergestellten Sägeblätter zeichneten sich durch gute Schneideigenschaften insbesondere bei Verwendung mit einem Oszillationsantrieb aus. Probleme, die bei entsprechenden Schneidblättern nach dem Stand der Technik, die aus zwei miteinander verbundenen Teilen bestanden, infolge des Ablösens des Befestigungsteils vom Schneidblatt auftraten, waren vollständig ausgeräumt.

Es versteht sich, daß sich derartige Schneidblätter auch bei Verwendung von anders zusammengesetzten härtbaren Stählen, vorzugsweise HSS-Stählen und in anderen Dimensionen herstellen lassen, sofern die Wärmebehandlungsparameter entsprechend angepaßt werden.

Es versteht sich ferner, daß neben der Herstellung von kreisförmigen Sägeblättern auch eine Herstellung von anders geformten Sägeblättern möglich ist, wobei es sich neben kreisabschnittsförmig geformten Sägeblättern, wie etwa durch die Sekante 18 in Fig. 1 angedeutet ist, auch um Spezialformen handeln kann, die nicht zeichnerisch dargestellt sind.

Schließlich sind solche Sägeblätter grundsätzlich auch im Zusammenhang mit rotatorischen Antrieben verwendbar, also etwa als Kreissägeblätter, sofern die Verzahnung entsprechend angepaßt wird.

## Patentansprüche

1. Verfahren zur Herstellung eines Sägeblattes, umfassend ein Schneidblatt (12), an dem ein abgekröpftes, gegenüber dem Schneidblatt (12) plastisch hervorstehendes Befestigungsteil (14) vorgesehen ist, in dem eine Befestigungsöffnung (16) zur Befestigung an einer Antriebswelle vorgesehen ist, umfassend die folgenden Schritte:
(a) Austrennen eines Rohlings (10', 10'') aus härtbarem Stahlblech,
(b) Umformen des Rohlings (10', 10'') zur Ausbildung des abgekröpften Befestigungsteils,
(c) Austrennen der Befestigungsöffnung (16),
(d) Stapeln einer Mehrzahl von nach den Schritten (a) bis (c) hergestellten Rohlingen (10', 10'') und Einspannen in einer Vorrichtung,
(e) Aufheizen der Rohlinge (10', 10'') zum Austenitisieren und anschließendes Abschrecken zum Härten der Rohlinge (10', 10''), und
(f) Feinbearbeiten, vorzugsweise Schleifen der Sägeblätter (10) zur Herstellung einer Verzahnung (20) an deren Außenrändern.

2. Verfahren nach Anspruch 1, bei dem die Rohlinge (10', 10'') nach dem Abschrecken zur Vergütung angelassen werden.

3. Verfahren nach Anspruch 1 oder 2, bei dem im Schritt (d) jeweils benachbarte Rohlinge (10', 10'') durch Zwischenlage einer Scheibe (22, 22', 22'') voneinander getrennt werden.

4. Verfahren nach Anspruch 1, 2 oder 3, bei dem spätestens innerhalb von 24 Stunden, vorzugsweise innerhalb von 12 Stunden, insbesondere innerhalb von 6 Stunden nach dem Umformen der Rohlinge mit einem Rekristallisationsglühen der Rohlinge begonnen wird.

5. Verfahren nach einem der vorhergehenden Ansprüche, bei dem die Rohlinge (10', 10'') im eingespannten Zustand gemäß den Schritten (e) und vorzugsweise (f) behandelt werden, sowie vorzugsweise auch vergütet werden.

6. Verfahren nach einem der vorhergehenden Ansprüche, bei dem Schritt (c) auch ein Grobbearbeiten der Rohlinge (10', 10'') an ihren Außenrändern, vorzugsweise durch Stanzen umfaßt.

7. Verfahren nach einem der vorhergehenden Ansprüche, bei dem das Umformen gemäß Schritt (b) durch Tiefziehen, Drücken, Biegen oder hydraulisches Umformen erfolgt.

8. Verfahren nach einem der vorhergehenden Ansprüche, bei dem die Rohlinge (10', 10'') zum Umformen erwärmt werden.

9. Verfahren nach einem der vorhergehenden Ansprüche, bei dem die Rohlinge (10', 10'') aus einem Stahlblech aus einem Schnellarbeitsstahl, vorzugsweise aus einem Schnellarbeitsstahl mit den Hauptlegierungsbestandteilen Wolfram, Molybdän und Kobalt, ausgetrennt werden.

10. Verfahren nach Anspruch 9, bei dem die Rohlinge (10', 10'') aus einem Blech der Zusammensetzung von etwa 0,8 bis 0,95 Gew.-% C, 3,8 bis 4,7 Gew.-% Cr, 4,5 bis 5,5 Gew.-% Mo, 1,7 bis 2,1 Gew.-% V, 5,8 bis 7 Gew.-% W mit Rest Fe, vorzugsweise von etwa 0,87 Gew.-% C, etwa 4,3 Gew.-% Cr, etwa 5 Gew.-% Mo, etwa 1,9 Gew.-% V, etwa 6,4 Gew.-% W mit Rest Fe, ausgestrennt werden.

11. Verfahren nach Anspruch 9 oder 10, bei dem Schritt (e) ein Rekristallisieren, vorzugsweise über etwa 1,5 bis 2,5 Stunden bei einer Temperatur von etwa 600 bis 700 °C, umfaßt.

12. Verfahren nach Anspruch 8, 9 oder 10, bei dem Schritt (e) ein Austenitisieren über etwa 3 bis 5 Minuten bei etwa 1020 bis 1080 °C umfaßt.

13. Verfahren nach einem der Ansprüche 8 bis 11, bei dem zum Vergüten ein erstes Anlassen beim Sekundärhärtemaximum über etwa 1,5 bis 2,5 Stunden bei etwa 530 bis 630 °C umfaßt, sowie ein zweites Anlassen auf eine gewünschte Arbeitshärte über etwa 1,5 bis 2,5 Stunden bei etwa 530 bis 630 °C, sowie ein drittes Anlassen zum Entspannen über etwa 40 bis 80 Minuten bei etwa 400 bis 500 °C.

14. Verfahren nach einem der vorhergehenden Ansprüche, bei dem die Wärmebehandlung zumindest gemäß Schritt (e) unter einem Formiergas durchgeführt wird.

15. Verfahren nach einem der vorhergehenden Ansprüche, bei dem die Sägeblätter an ihren beiden Außenoberflächen plangeschliffen werden.

16. Verfahren nach einem der vorhergehenden Ansprüche, bei dem die Rohlinge (10', 10'') aus einem Blech einer Stärke von etwa 0,7 bis 1,5 mm Stärke, vorzugsweise von etwa 1 mm Stärke, ausgetrennt werden.

## Claims

1. A method for manufacturing a saw blade, comprising a cutting blade (12), on which a cranked mounting part protruding beyond the cutting blade (12) is provided, the mounting part having a mounting opening (16) for fastening on a motor shaft, said method comprising the following steps:
(a) cutting a blank (10', 10") out of hardenable steel sheet;
(b) reshaping the blank (10', 10") to form the cranked mounting part;
(c) cutting out a mounting opening (16);
(d) stacking a plurality of blanks (10', 10") produced according to steps (a) to (c) and clamping in a fixture;
(e) heating the blank (10', 10") for austenitizing and quenching thereafter, to harden the blanks (10', 10"); and
(f) finish-machining, preferably grinding, the saw blades (10) to provide saw teeth (20) at their outer edges.

2. The method of claim 1, wherein the blanks (10', 10") are annealed after quenching.

3. The method of claim 1 or 2, wherein in step (d) adjacent pairs of blanks (10', 10") are separated by inserting a respective washer (22, 22', 22") there between.

4. The method of claim 1, 2 or 3, wherein a recrystallization annealing of the blanks is begun at the latest within 12 hours, in particular within 6 hours, after beginning with the reshaping of the blanks.

5. The method of any of the preceding claims, wherein the blanks (10', 10") while being clamped together are treated according to steps (e) and preferably (f) and are preferably also annealed.

6. The method of any of the preceding claims, wherein step (c) also comprises a rough-machining of the blanks (10', 10") on their outer edges, preferably by punching.

7. The method of any of the preceding claims, wherein reshaping is done according to step (b) by deep-drawing, pressing, bending or hydraulic forming.

8. The method of any of the preceding claims, wherein the blanks (10', 10") are heated for reshaping.

9. The method of any of the preceding claims, wherein the blanks (10', 10") are cut out of a steel sheet, preferably consisting of a of a rapid machining steel comprising the main alloying components tungsten, molybdenum and cobalt.

10. The method of claim 9, wherein the blanks (10', 10") are cut out of a sheet comprising about 0.8 to 0.95 wt.-% C, 3.8 to 4.7 wt.-% Cr, 4.5 to 5.5 wt.-% Mo, 1.7 to 2.1 wt.-% V, 5.8 to 7 wt.-% W, the reminder being Fe, preferably comprising about 0.87 wt-% C, about 4.3 wt-% Cr, about 5 wt-% Mo, about 1.9 wt-% V, about 6.4 wt-% W, the reminder being Fe.

11. The method of claim 9 or 10, wherein step (e) comprises recrystallization, preferably for 1.5 to 2.5 hours at a temperature of 600 to 700°C.

12. The method of claim 8, 9 or 10, wherein step (e) comprises an austenitizing for 3 to 5 minutes at a temperature between about 1020 and 1080°C.

13. The method of any of claims 8 to 11, comprising a first annealing at the secondary hardening maximum of the rapid machining steel for 1.5 to 2.5 hours at a temperature of 530 to 630°C, further comprising a second annealing to a desired working hardness for 1.5 to 2.5 hours at a temperature of about 530 to 630°C, and further comprising a third annealing for relaxing for about 40 to 80 minutes at about 400 to 500°C.

14. The method of any of the preceding claims, wherein the heat treatment at least according to step (e) is performed under a forming gas.

15. The method of any of the preceding claims, wherein the saw blades are plane-ground on their two outer surfaces.

16. The method of any of the preceding claims, wherein the blanks (10', 10") are cut out of a sheet metal with a thickness of about 0.7 to 1.5 mm, preferably of about 1 mm.

## Revendications

1. Procédé de fabrication d'une lame de scie, comprenant une lame de coupe (12) sur laquelle est prévue une partie de fixation (14) coudée formant saillie plastiquement par rapport à la lame de coupe (12), partie dans laquelle est prévue une ouverture de fixation (16) pour la fixation sur un arbre d'entraînement, comprenant les étapes suivantes :
(a) découpe d'une ébauche (10', 10") dans une tôle d'acier durcissable,
(b) façonnage de l'ébauche (10', 10") pour réaliser la partie de fixation coudée,
(c) découpe de l'ouverture de fixation (16),
(d) empilement d'une pluralité d'ébauches (10', 10") fabriquées selon les étapes (a) à (c) et montage dans un dispositif,
(e) chauffage des ébauches (10', 10") en vue d'une austénitisation, puis refroidissement pour durcir les ébauches (10', 10"), et
(f) usinage final, de préférence affûtage des lames de scie (10) pour réaliser une denture (20) sur leurs bords extérieurs.

2. Procédé selon la revendication 1, dans lequel les ébauches (10', 10") sont recuites après le refroidissement en vue d'un affinage.

3. Procédé selon la revendication 1 ou 2, dans lequel, à l'étape (d), des ébauches (10', 10") voisines sont séparées par interposition d'un disque (22, 22', 22").

4. Procédé selon la revendication 1, 2 ou 3, dans lequel au plus tard dans un délai de 24 heures, de préférence dans un délai de 12 heures, en particulier dans un délai de 6 heures après le façonnage des ébauches, on commence une cuisson de recristallisation des ébauches.

5. Procédé selon l'une quelconque des revendications précédentes, dans lequel les ébauches (10', 10") sont traitées à l'état monté selon les étapes (e) et de préférence (f), et sont de préférence également retrempées.

6. Procédé selon l'une quelconque des revendications précédentes, dans lequel l'étape (c) comprend également un usinage grossier des ébauches (10', 10") sur leurs bords extérieurs, de préférence par estampage.

7. Procédé selon l'une quelconque des revendications précédentes, dans lequel le façonnage de l'étape (b) s'effectue par emboutissage, refoulage, cintrage ou façonnage hydraulique.

8. Procédé selon l'une quelconque des revendications précédentes, dans lequel les ébauches (10', 10") sont chauffées pour le façonnage.

9. Procédé selon l'une quelconque des revendications précédentes, dans lequel les ébauches (10', 10") sont découpées dans une tôle d'acier rapide, de préférence un acier rapide ayant pour principaux composants d'alliage du tungstène, du molybdène et du cobalt.

10. Procédé selon la revendication 9, dans lequel les ébauches (10', 10") sont découpées dans une tôle ayant pour composition environ 0,8 à 0,95 % en poids de C, 3,8 à 4,7 % en poids de Cr, 4,5 à 5,5 % en poids de Mo, 1,7 à 2,1 % en poids de V, 5,8 à 7 % en poids de W, le reste étant Fe, de préférence environ 0,87 % en poids de C, environ 4,3 % en poids de Cr, environ 5 % en poids de Mo, environ 1,9 % en poids de V, environ 6,4 % en poids de W, le reste étant Fe.

11. Procédé selon la revendication 9 ou 10, dans lequel l'étape (e) comprend une recristallisation, de préférence pendant environ 1,5 à 2,5 heures à une température d'environ 600 à 700°C.

12. Procédé selon la revendication 8, 9 ou 10, dans lequel l'étape (e) comprend une austénitisation pendant environ 3 à 5 heures à environ 1020 à 1080 °C.

13. Procédé selon l'une des revendications 8 à 11, dans lequel le retrempage comprend un premier recuit au maximum de dureté secondaire pendant environ 1,5 à 2,5 heures à environ 530 à 630 °C, ainsi qu'un deuxième recuit à une dureté de travail souhaitée pendant environ 1,5 à 2,5 heures à environ 530 à 630 °C, ainsi qu'un troisième recuit de détente pendant environ 40 à 80 minutes à environ 400 à 500 °C.

14. Procédé selon l'une quelconque des revendications précédentes, dans lequel le traitement thermique de l'étape (e) est conduit sous un mélange de gaz de formation.

15. Procédé selon l'une quelconque des revendications précédentes, dans lequel les lames de scie sont aplanies sur leurs deux surfaces extérieures.

16. Procédé selon l'une quelconque des revendications précédentes, dans lequel les ébauches (10', 10") sont découpées dans une tôle ayant une épaisseur comprise entre environ 0,7 et 1,5 mm, de préférence d'environ 1 mm d'épaisseur.
